# EUROPEAN PATENT APPLICATION

(11) **EP 0 985 551 A1**
(43) Date of publication of application: **15.03.2000**
(21) Application number: 99908975.8
(22) Date of filing: 18.03.1999
(51) Int. Cl.: B44D 3/18, C08L 63/00, C08J 5/04

(54) **CARBON FIBER SHEET SUPPORT FOR RESTORING WALL PAINTINGS AND MAKING PICTORIAL AND SCULPTURAL WORKS**

(30) Priority: 18.03.1998 ES 9800589
(71) Applicant: UNIVERSIDAD COMPLUTENSE DE MADRID, E-28040 Madrid (ES)
(72) Inventor: HUERTAS TORREJON, Manuel, E-28040 Madrid (ES); PEREZ GONZALEZ, Carmen, E-28040 Madrid (ES); PARDA LANDA, Blanca, E-28040 Madrid (ES)
(74) Representative: Carpintero Lopez, Francisco
(86) International application number: ES9900067
(87) International publication number: WO9947366

(57) **Abstract**

Carbon fibre sheet support for restoration of mural paintings and producing pictorial and sculptural works.

New support for restoration of mural paintings in specific cases of transferring large size mural paintings requiring a flexible support, incorporating a new intervention layer, and for producing pictorial and sculptural works, based on a simple sheet of advanced composite materials: high resistance carbon fibre fabric with an epoxy matrix in any of its presentations, dry or preimpregnated fabric.

The fabrication processes are: for the dry fabric presentation, wet moulding by manual contact in a vacuum at a temperature and moulding by manual contact by a direct and affordable process by raising the temperature with heaters.

The field of application is arts, both for producing works of art and in their restoration.

## Description

### TECHNICAL CHARACTERISATION

The present invention lies within two fields: in first place, the technical field of fabrication supports for restoring mural paintings, more specifically for transferring large mural paintings which require a flexible support to simplify handling but which is sufficiently rigid so that it adequately supports the stripped layer, incorporating a novel model of an intervention layer; secondly, it can be used for producing works of art, both pictorial and sculptural. The fabrication material is an advanced composite material.

More specifically, the invention relates to a new support based on a carbon fibre sheet for use in restoring mural paintings and for creation of pictorial and sculptural works of art.

This support provides important advantages over sheet structures hitherto employed in embodiments of supports with a certain flexibility designed for transferring mural paintings which due to their large size required rolling. Its main advantage is that it prevents creep problems present in earlier solutions.

In addition, with this purpose and compared to previous experiences, it has the great advantage of economy in materials for applications which do not require the stiffness of a sheet and in which this may even be a disadvantage in the elaboration process. In addition, this new structure also allows to obtain the desired stiffness for each embodiment, while maintaining an adequate flexibility.

Thus, the support disclosed offers, compared to those used previously and for the same purposes, a reduction in space and improved mobility, transfer and packaging characteristics.

The main improvements provided for conservation-restoration processes by the new model of intervention layer relate to safety, uniform behaviour in the materials and reduced thickness of the ensemble.

As relates to artistic purposes, the support disclosed has also shown great ease of fabrication and handling, which favours its use for producing permanent works of art, whether flat or curved, two or three-dimensional, as such operations can be performed as twisting, folding, sewing, bending or crumpling.

The field of application is that of art, both for processes for creating works of art and in their restoration.

### BACKGROUND OF THE INVENTION

### Immediate background

The most immediate precedent is Patent no. 9402325 entitled: "Carbon fibre sheet support layer for creation and restoration of mural paintings".

In creation and restoration of mural paintings and creation of easel paintings, supports based on a simple sheet were characterised by providing a suitable stiffness for each creation.

The above mentioned patent summarises the background for rigid supports for mural painting restoration. These precedents include the definitions of transference, types, criteria and main prior experiences, including their advantages and disadvantages and the improvements provided by the simple sheet of carbon fibre in restoration of mural paintings. Likewise, precedents on creation of mural paintings and the improvements of this solution are described.

Additionally, precedents on use of flexible supports for restoration of mural paintings must be included.

### Background relating to flexible supports in restoration of mural paintings.

The only known precedents on use of flexible supports for transportation of mural paintings in restoration processes are found in the International Art University in Florence, carried out by a team led by Professor Sabino Giovanoni in the restoration of Santa Maria Novella (Florence).

This team tries to avoid, to the extent which it is possible, to divide large size works. The process thus involves stripping the entire work which covers a large surface (if it must be stripped), for which are used flexible supports with polyester resin sheets reinforced with fiberglass. The thickness of the supports created for these dimensions ranges between 5 and 10 mm.

In addition to being used for these large strippings, flexible supports have also been employed for work in *stappo*. In this case, fiberglass and polyester mat sheets which can be rolled are used. Since the layer removed from the wall is very thin, the pictorial surface can withstand the small displacements caused by the use of a flexible support. If, however, the removed layer were made from thick mortar, these displacements might cause serious damage to the work due to cracking or chipping.

Thus, it is for very thin stripping when this type of actions can be performed. In many occasions these are painting strippings which are too large to fit through the exit door and movable and flexible supports are required which may be rolled up.

This type of support has been produced only once as a flexible support, using a mat and polyester resin, and on one other occasion with an intervention layer.

The main setback of this type of support is that the mat used as a reinforcement (a fabric formed by short fibres which are randomly distributed in the surface) causes creep problems (time delayed deformation under a constant load) which sheets made from polyester mats reinforced with fiberglass suffer in general.

Once the setbacks of earlier solutions for rigid or flexible supports for restoring mural paintings have been described other options must be provided. The main problems to be solved are the excessive stiffness of sheets and the creep suffered by flexible support used for this purpose.

### DESCRIPTION OF THE INVENTION

The present invention relates to a new support for application in transportation in restoration of mural paintings which require flexibility, as well as for producing pictorial and sculptural works of art, based on a simple sheet of advanced composite materials.

The new support disclosed consists of a simple sheet of high resistance carbon fibre with an epoxy resin matrix which can be fabrication from any of the fabric presentations, whether dry or preimpregnated fabric.

Thus, it may consist of a flat, balanced fabric of high resistance carbon fibre, preimpregnated with a second generation epoxy type matrix cured at 180° C, or of a dry, balanced fabric of high resistance carbon fibre, wet impregnated with an epoxy type matrix cured at room temperature.

The industrial fabrication process for the preimpregnated carbon fibre involves placing between two plastic films a sheet of this fibre, preimpregnated with an epoxy resin which polymerises at high temperatures. This preimpregnation is partially cured in order to produce a flexible compound. It is then stored in refrigerated chambers until used and fully cured.

Also available is an industrial presentation as dry carbon fibre fabric to which a two-component epoxy resin is added, the properties of which may be chosen from among a large variety available in the market.

Fabrication processes which can be used fall into two general categories: 'wet' and 'preimpregnated'. Each of these has a number of special characteristics which makes them more or less adequate, depending on the work to be performed. The processes used are the following:
- for producing expressive flexible supports, a process based on the dry fabric presentation, with wet moulding by manual contact at room temperature;
- for producing flat surface flexible supports, a process using the preimpregnated presentation with moulding by manual contact, in a vacuum and at a temperature;
- for producing flexible supports with scant means and little effort, a process based on the preimpregnated presentation, with moulding by manual contact, by a direct and affordable process, raising the temperature around the works with heaters.

For the carbon fibre simple sheet support for restoration of mural paintings, the present invention provides a new model of intervention layer which employs the same material used for producing the support, carbon fibre, whose functionality relies on the concept of incompatible adhesion (thermostable-thermoplastic).

The invention provides the following advantages:

This new support structure shows great ease of handling, so that it is suitable for producing works of art, both flat and three dimensional, which do not require a great stiffness.

Additionally, the properties of the material make it particularly suited for applications in restoration of mural paintings where a certain support flexibility and a good resistance are important. The properties of carbon fibre prevent creep problems from appearing. This new system also allows to save material, and because of the new model of intervention layer used it allows to reduce the thickness of the ensemble and contributes to its uniformity and safety.

Different supports can be designed based on a single sheet of this material while maintaining the proposed structure and making use of the properties of each reinforcement presentation of the carbon fibre fabric, thus allowing to apply the more convenient solution depending on the stiffness and flexibility requirements of the work to be produced.

In addition, it is possible to choose between the presentations of the material as dry or preimpregnated fabric, thus having an additional selection criterion for the material depending on the requirements of the intended application.

Finally, selection of the fabrication method is another important point in creation of these supports which aids in further increasing the production possibilities.

Thus, this material has a wide range of possibilities which, together with its ease of handling, help to produce a large variety of art supports which also help to reduce expenses, thus reducing the cost of the work produced.

The sculpture embodiment also has the advantage of allowing direct production of final works with the same material, as has been proved in experiences with it which are described below.

### EMBODIMENT OF THE INVENTION

Depending on the different reinforcements or weaves of the carbon fibre, each has been employed for the different embodiments on order to obtain full advantage of the possibilities of the material. This variety in reinforcements has allowed to choose a different one for each embodiment, so that the most suitable one can be recommended for each use.

Thus, for figures with curves (with volume), a twill-type preimpregnated carbon fibre fabric has been used, as it is more flexible and stronger than the flat fabric. A number of sculptural works were produced, for which a structure was previously formed with welded steel wire, with the final work created by moulding the material on the wire. In these creations a suitable response of the fabric was obtained at all times for the volume requirements.

The most suitable reinforcement for curved figures is a satin weave, as it is the most flexible and adaptable form.

For flat figures and surfaces without volume, which do not require three dimensions, a flat or taffeta fabric is recommended, as this provides a good stability with little deformation, so that its properties are well suited for this purpose.

### Embodiment with wet implementation moulding by manual contact.

For the wet implementation, a dry carbon fibre fabric is used, which is impregnated manually by means of a moulding process by manual contact, with which an irregular finish may be obtained and a large freedom of action for artistic purposes is available. This process has been used in experiences of creation of sculptures since greater capacity for expression was required.

Experiences carried out with the wet process, impregnating the dry fibre, provide the artist with a great freedom of action, allowing to introduce changes in the amount of resin applied and in the degree of impregnation of the fibre.

The artistic possibilities of this method are numerous, among the most important of which is the possibility of producing flops in the resin layer. However, it is important to prevent this from happening in an undesired manner. This allows the artist to create a large number of expressive and even pictorial finishes of the resin, claiming the process itself if considered necessary. In this case, the process consists of taking advantage of the organic fluidity produced by the resin, allowing a free expression of the material.

In wet methods, epoxy resin has been employed for impregnating the carbon fibre. Specifically, the resin employed was EPO 95 by Feroca, although other epoxy resins may be used depending on their properties and the requirements of the work to be created.

### Implementation with preimpregnation and moulding by contact with vacuum and heat.

When a perfect finish is desired for the work, with regular surfaces and an even distribution of the material, it is best to choose the preimpregnated fabric presentation option, as it has been shown to be best suited for this type of requirements. Thus, it is the most convenient one for applications in restoration or creation which require a perfect finish.

An experience has been carried out of creation of a support for mural paintings where flatness and flexibility were desired in a single sheet. Fabrication was by moulding by contact with a vacuum.

In these cases the lower freedom of intervention of the artist to obtain different effects on the surface of the pieces (such as resin layer flops) is less important as this presentation is indicated for creating works which do not require these results. Instead, by preimpregnation the artist may seek a smooth and clean finish with perfect planes.

Thus, for these experiences a preimpregnated carbon fibre fabric was used in order to take advantage of its even impregnation and the minimum resin content of each sheet.

Depending on its specifications, this preimpregnated fibre provided good behaviour with temperature changes and chemical agents. Additionally, the properties of the epoxy resin used allowed to attenuate degradation due to ultraviolet radiation.

The ideal epoxy resin for these applications of the preimpregnated fabric would be that which polymerises at room temperature or at 60°C, which can now be found in commercially distributed preimpregnations. This resin has properties which are similar to those used in these implementations; however, it is cured without using very high temperatures.

Use of the fabric preimpregnated with this resin would simplify fabrication by reducing curing times and the temperature required to obtain polymerisation. In this way, it would be easier to obtain a composite material with all its properties as the preimpregnate manufacturer's specification could be followed more easily.

Since an artistic rather than engineering application of this material is intended, the re is no need for the high load resistance performance which can be achieved with the industrial fabrication process in which the material is cured with a vacuum, under pressure and at a temperature of 180°C.

However, in these tests we have tried to make use of the advantages provided by the use of a vacuum for obtaining on one hand perfectly flat surfaces, and on the other surfaces with volume. For this a vacuum pump has been used as well as a number of auxiliary materials which form a vacuum bag.

Thus, the final quality of the parts is obtained in this series of embodiments by using a slightly different manufacturing process, involving hot moulding in a vacuum, at a temperature of 50°C. The material remained inside the vacuum bag at all times until completely cured and the temperature of the bag was raised by an electric blanket.

After the curing process a support was obtained with the desired flatness properties for this embodiment test, the purpose of which was to create a pictorial surface with these characteristics.

### Implementation with preimpregnation and free fabrication method.

Finally, for the preimpregnated presentation, a fabrication process has been designed which is novel, direct and affordable for the artist or restorer, which attempts to avoid the disadvantages of not having specific industrial installations and materials for treating this material.

The final series of embodiments mean to introduce a number of variations in the part elaboration process so that it is simpler for the artist to carry this out in the studio without the technical means described in the specifications on fabrication of these materials.

An example of these changes is the substitution of the high temperature curing method, a first attempt at which was to apply conditions which resembled industrial ones as closely as possible but which were accessible to a user outside an industrial environment.

One of the proposals of the test was to cure the material by raising the temperature around the works and employing a compatible adhesive or clamps to prevent displacements from occurring in the work while curing. This was required as, although at first impregnation provided a better finish and flexibility of use, it would soften while polymerisation was being obtained, causing displacements in the fabric. A temperature suitable for curing was obtained by a set of heaters place around the parts which remained active for days.

This process was found to greatly accelerate polymerisation as compared to the same process at room temperature. The improved curing times were obtained by subjecting the pieces to intermittent heat periods of between 2 and 7 hours, with temperatures being reached at some times and at some places as high as 110°C due to the heaters.

This process turned out to be a success as its results were fully satisfactory for the purposes desired, and these were obtained by an alternative process to the industrial fabrication processes which require technical means much harder to come by for the artist.

In this way, two pictorial supports and one support for transferring mural paintings which might require rolling because of their large size were obtained.

Thus, we may conclude that for a performance level required in the intended applications for this support, the heater curing method is a perfectly valid fabrication method.

Another proposal of the test consisted of changing the work finish and union system by employing a prefabricated mould, or when the piece so required replacing the adhesive by a sewing system which favoured the design of the material and prevented any displacement of the different parts of the piece while curing.

These implementation processes have resulted in creation of several three dimensional pieces or models. In these the preimpregnated carbon fibre material has been used for producing several pictorial works in different shapes, in a process which was meant to show the possibilities of the design and the simplicity of the shapes. Volumes were produced by moulds and, by gluing and sewing, folds and other modulations were obtained.

Once the resin polymerises the volumes obtained remain as designed, allowing the artist to use the dynamism of the forms in multidimensional pictorial surfaces which go beyond the concepts of painting or sculpture.

These tests may be opening the path for new simpler procedures which are at the reach of professionals of any field.

### Intervention layer for restoration-conservation of mural paintings.

A new model of intervention layer has been developed for obtaining supports meant to be used in conservation-restoration processes of mural paintings. This intervention layer is made from the same material used for the support and its functionality relies on the concept of incompatible adhesion.

The present model applied to carbon fibre sheets involves the creation of an intervention layer which consists of weaving the same fabric and applying adhesives of different characteristics to each face, in this case a thermoplastic PVA, a condition which would allow, if required, to separate the intervention layer. This process is performed making use of the different solubility of the adhesives, which allows separating one from the adhesion while the other fully maintains its adhesive capacity.

## Claims

1. Support with a simple carbon fibre sheet for restoration of mural paintings requiring flexibility and for producing pictorial and sculptural works, characterised by employing a simple sheet of high resistance carbon fibre fabric with an epoxy resin matrix, fabrication from any of the presentations for the fabric, dry or preimpregnated.

2. Support with a simple carbon fibre sheet for restoration of mural paintings requiring flexibility and for producing pictorial and sculptural works as in previous claim, characterised in that it consists of a flat, balanced fabric of high resistance carbon fibre, preimpregnated in a second generation epoxy type resin which is cured at 180°C.

3. Support with a simple carbon fibre sheet for restoration of mural paintings requiring flexibility and for producing pictorial and sculptural works which require expressivity, as in claim 1, characterised in that it consists of a dry, balanced fabric of high resistance carbon fibre, wet impregnated with an epoxy type matrix which is cured at room temperature.

4. Support with a simple carbon fibre sheet for restoration of mural paintings requiring flexibility and for producing pictorial and sculptural works as in claim 3, characterised in that the fabrication process employs the dry fabric presentation with wet moulding by manual contact at room temperature, used for flexible, expressive supports.

5. Support with a simple carbon fibre sheet for restoration of mural paintings requiring flexibility and for producing pictorial and sculptural works as in claims 1 and 2, characterised in that the fabrication process employs the preimpregnate with manual moulding with a vacuum and temperature, used for flexible, flat surface supports.

6. Support with a simple carbon fibre sheet for restoration of mural paintings requiring flexibility and for producing pictorial and sculptural works as in claims 1 and 2, characterised in that the fabrication process employs the preimpregnate with manual moulding and by raising the temperature around the pieces with heaters, used for flexible supports.

7. Support with simple carbon fibre sheet as in above claims, characterised in that it is used for mural painting restoration requiring flexibility and for producing pictorial and sculptural work.

8. Support with simple carbon fibre sheet used for mural painting restoration requiring flexibility, characterised in that it incorporates a new intervention layer model comprised by a high resistance carbon fibre sheet, the functionality of which relies on incompatible adhesions.
